# EUROPÄISCHE PATENTSCHRIFT

(11) **EP 3 985 997 B1**
(45) Veröffentlichungstag und Bekanntmachung des Hinweises auf die Patenterteilung: **22.05.2024**
(21) Anmeldenummer: 21194731.2
(22) Anmeldetag: 03.09.2021
(51) Int. Cl.: H04R 25/00

(54) **HÖRGERÄTSYSTEM UND VERFAHREN ZU DESSEN BETRIEB**
HEARING AID AND METHOD FOR ITS OPERATION
SYSTÈME D'APPAREIL AUDITIF ET SON PROCÉDÉ DE FONCTIONNEMENT

(30) Priorität: 15.10.2020 DE 102020213048
(43) Veröffentlichungstag der Anmeldung: 20.04.2022
(73) Patentinhaber: Sivantos Pte. Ltd., Singapore 539775 (SG)
(72) Erfinder: KAMKAR-PARSI, Homayoun, 91058 Erlangen (DE); LUGGER, Marko, 91365 Weilersbach (DE); GÖKAY, Umut, 55116 Mainz (DE)
(74) Vertreter: FDST Patentanwälte

(56) Entgegenhaltungen:
- EP-A1- 3 148 221
- EP-A1- 3 291 580
- EP-A1- 3 328 097
- EP-A1- 3 726 856

## Beschreibung

Die Erfindung betrifft ein Verfahren zum Betrieb eines Hörgerätesystems. Weiterhin betrifft die Erfindung ein Hörgerätesystem.

Ein Hörhilfegerät dient der Versorgung einer hörgeschädigten oder hörbeeinträchtigten Person, welche das Gerät - typischerweise durchgängig oder die meiste Zeit - trägt, um ein Gehördefizit auszugleichen. Das Hörhilfegerät kann dabei in unterschiedlichen Bauformen bereitgestellt werden, um den individuellen Bedürfnissen des Trägers entgegen zu kommen. Beispielsweise ist das Hörhilfegerät als Hinterdem-Ohr-Hörgerät (HdO, behind the ear "BTE"), als Hörgerät mit externem Hörer (reciever in canal "RIC") oder als In-dem-Ohr-Hörgeräte ("IdO") ausgebildet.

Das Hörhilfegerät weist zumindest einen elektroakustischen Wandler, insbesondere ein Mikrofon auf, mit dem (Luft-)Schall aus der Umgebung des Trägers erfasst wird. Ein entsprechendes vom Wandler ausgegebenes Signal wird von einer Signalverarbeitungseinheit hinsichtlich der Bedürfnisse des Trägers bearbeitet, insbesondere verstärkt. Das bearbeitete Signal wird an einen Hörer (Lautsprecher) geleitet und von diesem als Schall in den Gehörgang oder an das Trommelfell des Trägers ausgegeben.

Das Hörhilfegerät kann dabei mit einem digitalen (virtuellen) Assistenten eines Peripheriegeräts gekoppelt werden, welcher zur Erbringung von (Assistenz-) Diensten vorgesehen ist. Hierzu wird eine Spracherkennung durchgeführt und die erkannte Sprache bzw. deren Inhalt vom digitalen Assistenten interpretiert.

Beispielsweise ist aus der DE 10 2018 209 719 A1 ein Verfahren zum Betrieb eines Hörgerätesystems bekannt, welches Hörgerätesystem ein Hörgerät und einen virtuellen Assistenten aufweist, sowie zur Identifikation eines Nutzers des Hörgerätes, welcher einen Sprachbefehl an den zumindest einen virtuellen Assistenten sendet angegeben, wobei von dem zumindest einen virtuellen Assistenten der Inhalt des Sprachbefehls empfangen wird und von dem Hörgerät ein Informationssignal, welches eine Information über ein Vorliegen einer Freigabebedingung enthält, an den zumindest einen virtuellen Assistenten übermittelt wird. Dabei wird der Inhalt des Sprachbefehls von dem zumindest einen virtuellen Assistenten in Abhängigkeit der Information über das Vorliegen der Freigabebedingung ausgeführt.

In der DE 10 2018 209 822 A1 ist ein Verfahren zur Steuerung der Datenübertragung zwischen zumindest einem Hörgerät und einem Peripheriegerät eines Hörgerätesystems dargestellt, wobei ein von dem Hörgerät erfasstes Mikrofonsignal automatisch auf Eigenstimmanteile des Hörgeräteträgers untersucht wird, und wobei bei Erkennen von Eigenstimmanteilen eine nachfolgende Audiosequenz des Mikrofonsignals vom Hörgerät auf das Peripheriegerät übertragen wird.

Aus der EP 3 328 097 A1 ist ein Hörgerät bekannt, das mit einem digitalen Assistenten eines anderen Geräts anhand einer Stimmenschnittstelle verbunden werden kann, wobei die Stimmenschnittstelle dazu konfiguriert ist, ein spezifisches Wort oder eine spezifische Wortverbindung oder einen spezifischen Schall zur Stimmenaktivierung zu detektieren.

In der EP 3 291 580 A1 ist ein Hörhilfegerät offenbart, anhand dessen Spracherkennung ein Steuersignal für ein externes Gerät generiert wird.

Der Erfindung liegt die Aufgabe zugrunde, ein besonders geeignetes Verfahren zum Betrieb eines Hörgerätesystems, welches ein Hörhilfegerät sowie ein einen sprachgesteuerten digitalen Assistenten bereitstellendes Peripheriegerät aufweist, anzugeben. Insbesondere soll dabei eine falsche Erkennung und/oder eine falsche Interpretation einer Sprachsequenz durch den digitalen Assistenten vermieden werden. Des Weiteren soll solches Hörgerätesystem und ein entsprechendes Hörhilfegerät angegeben werden.

Hinsichtlich des Verfahrens wird die Aufgabe erfindungsgemäß gelöst durch die Merkmale des Anspruchs 1. Hinsichtlich des Hörhilfegeräts wird die Aufgabe durch die Merkmale des Anspruchs 9 und hinsichtlich des Hörgerätesystems durch die Merkmale des Anspruchs 10 erfindungsgemäß gelöst. Vorteilhafte Weiterbildungen und Ausgestaltungen sind Gegenstand der Unteransprüche. Dabei geltend die Ausführungen im Zusammenhang mit dem Verfahren sinngemäß auch für das Hörgerätesystem und umgekehrt.

Das Verfahren dient dem Betrieb eines Hörgerätesystems, welches ein Hörhilfegerät und ein Peripheriegerät aufweist. Das Peripheriegerät, welches beispielsweise als ein Smartphone oder als ein sogenannter Smart Speaker ausgebildet ist, ist mit dem Hörhilfegerät signalübertragungstechnisch koppelbar und zweckmäßigerweise auch gekoppelt. Dabei stellt das Peripheriegerät einen sprachgesteuerten digitalen Assistenten, welcher auch als virtueller Assistent bezeichnet wird, bereit. Beispielsweise ist der sprachgesteuerte digitale Assistent "Siri" von Apple, "Alexa" von Amazon oder "Google Now" für Google-Anwendungen.

Verfahrensgemäß wird ein Mikrofonsignal vom Hörhilfegerät, vorzugsweise automatisch, auf Eigenstimmanteile des Trägers des Hörhilfegerät untersucht. Mit anderen Worten wird das Mikrofonsignal auf das Vorhandensein der eigenen Stimme des Trägers hin analysiert. Das Mikrofonsignal repräsentiert dabei den von einem Mikrofon des Hörhilfegeräts erfassten Umgebungsschall, welcher vom Mikrofon in das Mikrofonsignal gewandelt wurde.

Diese Eigenstimmerkennung (engl. "own voice detection") erfolgt dabei beispielsweise anhand eines Pegelvergleichs von Signalen eines an oder hinter der Ohrmuschel getragenen (Umgebungs-)Mikrofons und einem im Gehörgang des Trägers getragenen (Gehörgangs-)Mikrofons. Alternativ oder zusätzlich wird zur Erkennung der eigenen Stimme des Trägers ein räumliches Filter, insbesondere monaurales oder binaurales beamforming, auf Signale der Mikrofone des Hörhilfegeräts angewendet, so dass Schall, der vom Mund des Trägers ausgeht, bestimmt werden kann.

Weiterhin wird verfahrensgemäß das Mikrofonsignal bei Erkennen von Eigenstimmanteilen, bevorzugt automatisch, vom Hörhilfegerät auf einen vordefinierten Aktivierungsbefehl des digitalen Assistenten untersucht. Dieser Aktivierungsbefehl ist dabei zweckmäßigerweise in einem Speicher des Hörhilfegeräts hinterlegt. Das Hörhilfegerät führt also eine Spracherkennung (Worterkennung) am Mikrofonsignal durch. Insbesondere dient der Aktivierungsbefehl der Aktivierung eines Sprach-Interfaces des digitalen Assistenten.

Sofern der Aktivierungsbefehl erkannt wurde, wird derjenige Teil des Mikrofonsignals, welcher den Aktivierungsbefehl sowie eine darauf folgende Sprachsequenz aus Wörtern des Trägers repräsentiert, für eine Spracherkennung des digitalen Assistenten vom Hörhilfegerät anhand eines Algorithmus bearbeitet. Insbesondere weist das Hörhilfegerät hierzu eine Signalbearbeitungseinheit auf. Dieser Teil des Mikrofonsignals, welcher den Aktivierungsbefehl sowie eine darauf folgende Sprachsequenz des Trägers repräsentiert, wird im Folgenden kurz auch als Sprachsignal bezeichnet.

Anschließend wird der bearbeitete Teil des Mikrofonsignals an das Peripheriegerät übertragen und zweckmäßigerweise für eine Spracherkennung durch den digitalen Assistenten an diesen weitergeleitet.

Bevorzugt erfolgt die Übertragung nach Art eines (Live-)"Streams". Bei Erkennen des Aktivierungsbefehl erfolgt eine Aufnahme dessen und der nachfolgenden Sprachsequenz sowie eine direkte Übermittlung, insbesondere als Audiosignal, also als ein Signal mit einem Audio-Format wie beispielsweise "wma" oder "mp3", an das Peripheriegerät.

Aufgrund der Bearbeitung durch das Hörhilfegerät ist es somit vorteilhaft ermöglicht, eine Erkennung der Sprache durch die Spracherkennung des digitalen Assistenten zu verbessern. Insbesondere werden dabei im Unterschied zur Bearbeitung eines Signals für eine bessere Verständlichkeit durch einen Menschen bzw. im Unterschied zur Bearbeitung des Signals zum Ausgleich eines Hörschadens des Trägers des Hörhilfegeräts beispielsweise andere Algorithmen, Filter oder Parameter genutzt, bei denen das bearbeitete Sprachsignal, bzw. ein entsprechend ausgegebener Schall, für einen Menschen als unangenehm und/oder ungewohnt empfunden werden, für eine Spracherkennung des digitalen Assistenten jedoch besser hinsichtlich einer Erkennungsrate geeignet sind.

Zweckmäßigerweise wird das Sprachsignal derart bearbeitet, dass eine Erkennungsrate des Aktivierungsbefehls bzw. der darauf folgenden Sprachsequenz bzw. deren Worte, durch eine Spracherkennung möglichst hoch und möglichst korrekt ist. Mit anderen Worten wird das Sprachsignal an die Spracherkennung des digitalen Assistenten angepasst.

Gemäß einer bevorzugten Weiterbildung ist der Algorithmus hierzu adaptiv. Mit anderen Worten ist der Algorithmus veränderbar, insbesondere anpassbar. Zweckmäßigerweise ist der Algorithmus derart anpassbar und wird zweckmäßig derart angepasst, dass eine Erkennungsrate der Spracherkennung des digitalen Assistenten erhöht wird. Hierzu wird beispielsweise ein Parameter, ein Koeffizient und/oder eine Funktion des Algorithmus angepasst. Die Anpassung erfolgt dabei beispielsweise entsprechend eines Optimierungsverfahrens. Beispielsweise umfasst der Algorithmus ein neuronales Netz oder umfasst maschinelles Lernen.

Gemäß einer bevorzugten Weiterbildung wird und/oder wurde der Algorithmus anhand eines Trainings eingestellt bzw. angepasst, vorzugsweise hinsichtlich einer Erhöhung der Erkennungsrate der Spracherkennung des digitalen Assistenten. Beispielsweise findet ein solches Training im Rahmen eines allgemeinen Fittings beim Akustiker, in einem hierzu vorgesehenen Trainings-Betriebsmodus des Hörhilfegeräts, oder während des Normalbetriebs des Hörhilfegeräts statt.

Zweckmäßigerweise wird der Algorithmus dann angepasst, wenn eine Erkennungsrate unter einem vorgegebenen Schwellenwert liegt. Für eine Bestimmung der Erkennungsrate wird beispielsweise ein Antwortsignal vom digitalen Assistenten bzw. vom Peripheriegerät an das Hörhilfegerät ausgegeben, wobei das Antwortsignal eine Information darüber enthält ob der Aktivierungsbefehl und/oder der nachfolgende Sprachsequenz von der Spracherkennung des digitalen Assistenten erkannt oder mit ausreichender Zuverlässigkeit erkannt wurde.

Zusammenfassend ist der Algorithmus besonders bevorzugt an die Spracherkennung des digitalen Assistenten angepasst und/oder anpassbar, insbesondere hinsichtlich einer möglichst hohen Erkennungsrate des Aktivierungsbefehls und/oder der darauf folgenden Sprachsequenz.

Gemäß einer geeigneten Ausgestaltung umfasst der Algorithmus ein räumliches Filter, insbesondere ein monaurales oder ein binaurales beamforming. Somit wird bei der Bearbeitung des den Aktivierungsbefehl sowie die darauf folgende Sprachsequenz repräsentierenden Teils des Mikrofonsignals das räumliche Filter auf diesen Teil des Mikrofonsignals angewendet. Somit können räumlich zueinander beabstandete Geräusch-/Sprachquellen entsprechend verstärkt bzw. gedämpft werden.

Vorzugsweise werden anhand des Beamformings Störquellen unterdrückt, also deren Signalintensität verringert. Im Vergleich zu einem Beamforming, das für die Bearbeitung eines Signals zur Ausgabe an den Träger verwendet wird, kann hier ein vergleichsweise "aggressives" Filtern verwendet werden, denn das bearbeitete Sprachsignal soll nicht an den Träger ausgegeben und von diesem als angenehm empfunden werden. Vielmehr soll lediglich eine Erkennungsrate durch die Spracherkennung des digitalen Assistenten erhöht werden. So werden besonders bevorzugt diejenigen Bestandteile des Sprachsignal, welche nicht vom Mund des Trägers ausgehen, auf null reduziert und/oder ein vergleichsweise kleiner (räumlicher) Bereich als Mund des Trägers verwendet.

Beispielsweise wird hierbei das räumliche Filter genutzt, welches zur Eigenstimmerkennung herangezogen wurde. Vorzugsweise jedoch wird ein weiteres räumliches Filter verwendet, welches die Eigenstimmanteile des Sprachsignals nicht ändert, und die anderen Anteile des Sprachsignals, vorzugsweise auf null, reduziert.

Gemäß einer geeigneten Ausgestaltung umfasst der Algorithmus ein Rauschfilter. Dieses reduziert ein Rauschen des Sprachsignals, also desjenigen Teils des Mikrofonsignals, welcher den Aktivierungsbefehl sowie eine darauf folgende Sprachsequenz des Trägers repräsentiert, in Abhängigkeit eines Signal-zu-Rausch-Verhältnisses des Sprachsignals. Zusammenfassend wird bei der Bearbeitung des Sprachsignals das Rauschfilter auf das Sprachsignal angewendet.

Insbesondere ist hierbei eine Stärke der Reduzierung des Rauschens, also ein Betrag der Dämpfung des Rauschens, anhand eines zeitlich vorher erfolgten Trainings, beispielsweise beim Akustiker im Zuge eines allgemeinen Fittings des Hörhilfegeräts, bereits eingestellt bzw. angepasst. Zusätzlich oder alternativ ist die Stärke der Reduzierung des Rauschens anhand eines (weiteren) Training einstellbar.

Gemäß einer geeigneten Ausgestaltung des Verfahrens umfasst der Algorithmus ein spektrales Filter, welches die spektralen Bestandteile des Sprachsignals, insbesondere selektiv, modifiziert. Geeigneter Weise reduziert das spektrale Filter die Bestandteile des Sprachsignals in einem Frequenzbereich für kleine Frequenzen, insbesondere für Frequenzen kleiner als 500 Hz oder kleiner als 200 Hz. Hierbei kann auch eine Reduzierung dieser Bestandteile auf null, somit ein Entfernen dieser Anteile aus dem Sprachsignal, erfolgen. Geeigneter Weise werden alternativ oder zusätzlich hierzu die Bestandteile des Sprachsignals in einem Frequenzbereich für hohe Frequenzen, insbesondere für Frequenzen größer als 4 kHz, also im Bereich der Frikative und der Konsonaten, anhand des spektralen Filters verstärkt.

Anhand des spektralen Filters kann insbesondere bei einem vergleichsweise geringem Signal-zu-Rausch-Verhältnis eine Erkennbarkeit des Aktivierungsbefehls und/oder der darauf folgenden Sprachsequenz erhöht werden.

Beispielsweise werden im Zuge eines Trainings die Frequenzbereiche für die Reduzierung der Bestandteile des Sprachsignals bei kleinen Frequenzen und/oder für die Verstärkung der Bestandteile des Sprachsignals bei großen Frequenzen angepasst. Zusätzlich oder alternativ kann der Betrag der Dämpfung oder Verstärkung im Zuge des Trainings angepasst werden.

Das räumliche Filter, das Rauschfilter, und/oder das spektrale Filter bearbeitet das Sprachsignal bevorzugt lediglich im Frequenzraum.

Gemäß einer geeigneten Ausgestaltung des Verfahrens wird bei der Bearbeitung des Sprachsignals eine Spracherkennung mittels des Hörhilfegeräts, insbesondere mittels dessen Spracherkennungseinheit, durchgeführt. Dabei wird nach einem, zweckmäßiger Weise nach jedem, erkannten Wort des Aktivierungsbefehls und/oder der Sprachsequenz an der entsprechenden Stelle des Sprachsignals ein (Wort-)Trennsignal, insbesondere ein Null-Signal, eingefügt wird. Die Wörter des Aktivierungsbefehls und/oder der Sprachsequenz werden somit also voneinander separiert.

Auf diese Weise wird auch bei undeutlicher Aussprache eine Erkennung der Wörter des Aktivierungsbefehls und/oder der Sprachsequenz mittels der Spracherkennung des digitalen Assistenten erleichtert.

Erfindungsgemäß wird vom Peripheriegerät, insbesondere vom digitalen Assistenten, ein Fehler-Signal an das Hörhilfegerät übertragen, wenn die Spracherkennung des Peripheriegeräts bzw. des digitalen Assistenten den Aktivierungsbefehl und/oder die darauf folgende Sprachsequenz nicht oder nicht ausreichend zuverlässig erkennt. In diesem Fall wird das Sprachsignal erneut anhand des Algorithmus bearbeitet, wobei der Algorithmus zuvor geändert wurde. Insbesondere wird - in analoger Weise zu einem Training - ein Parameter, ein Koeffizient und/oder eine Funktion des Algorithmus angepasst. Die Anpassung erfolgt dabei beispielsweise entsprechend eines Optimierungsverfahrens hinsichtlich der Erkennungsrate.

Weiterhin ist vorgesehen, dass das der erneut bearbeitete Sprachsignal an das Peripheriegerät und dort an den digitalen Assistenten für eine Spracherkennung übertragen wird. Somit ist es vorteilhaft ermöglicht, dass der Aktivierungsbefehl und die darauf folgende Sprachsequenz erneut von der Spracherkennung des digitalen Assistenten analysiert wird, ohne dass der Träger des Hörgeräts den Aktivierungsbefehl oder die Sprachsequenz wiederholen muss.

Die erneute Bearbeitung mit geändertem Algorithmus sowie das erneute Senden erfolgt dabei vorzugsweise automatisch. Allenfalls ist ein Komfort des Trägers des Hörhilfegeräts vorteilhaft erhöht.

Erfindungsgemäß weist ein Hörhilfegerät für ein Hörgerätesystem zumindest ein Mikrofon anhand dessen Schall aus der Umgebung des Hörhilfegeräts erfasst und ein diesem Schall entsprechendes Mikrofonsignals erzeugt werden kann.

Weiterhin weist das Hörhilfegerät sowohl eine Eigenstimmerkennungseinheit zur Untersuchung des Mikrofonsignals auf Eigenstimmanteile des Trägers des Hörhilfegeräts, welche mit dem Mikrofon signalübertragungstechnisch gekoppelt ist, als auch eine erste Spracherkennungseinheit auf, welche der Untersuchung des Mikrofonsignals auf einen vordefinierten Aktivierungsbefehl eines sprachgesteuerten digitalen Assistenten eines zugeordneten Peripheriegeräts dient.

Das Hörhilfegerät umfasst weiterhin eine Signalbearbeitungseinheit auf, welche Algorithmus zur Bearbeitung des Sprachsignals bereitstellt. Die Signalbearbeitungseinheit ist dabei derart eingerichtet, dass derjenige Teil des Mikrofonsignals, welcher den Aktivierungsbefehl sowie eine darauf folgende Sprachsequenz repräsentiert, also dass das Sprachsignal bei Erkennen des vordefinierten Aktivierungsbefehls des digitalen Assistenten anhand des Algorithmus bearbeitet. Insbesondere ist der Algorithmus an den digitalen Assistenten bzw. an die Spracherkennung dessen angepasst und/oder ist daran anpassbar. Zweckmäßig ist die Signalbearbeitungseinheit mit der Eigenstimmerkennungseinheit und/oder mit der erste Spracherkennungseinheit signalübertragungstechnisch gekoppelt.

Zur Übertragung des bearbeiteten Teils des Mikrofonsignals an das Peripheriegerät weist das Hörhilfegerät eine erste Übertragungseinheit auf. Diese ist bevorzugt für eine kabellose Übertragung bzw. Funkübertragung, beispielsweise mittels Bluetooth oder Bluetooth LE (Bluetooth Low Energy) eingerichtet.

Erfindungsgemäß weist ein Hörgerätesystem, welches gemäß dem Verfahren in einem der oben dargestellten Varianten betreibbar ist bzw. betrieben wird, zumindest ein Hörhilfegerät auf. Beispielsweise weist das Hörhilfegerätesystem ein zweites Hörhilfegerät für den Träger zum binauralen Hören auf, wobei die beiden Hörhilfegeräte signalübertragungstechnisch miteinander koppelbar und zweckmäßig auch miteinander gekoppelt sind.

Das Hörgerätesystem umfasst ergänzend das Peripheriegerät mit dem den sprachgesteuerten digitalen Assistenten. Das Peripheriegerät umfasst eine zweite Übertragungseinheit zum Empfang des vom Hörhilfegerät übertragenen Teils des Mikrofonsignals. Zusätzlich oder alternativ dient die zweite Übertragungseinheit zum Übertragen eines Antwortsignals, beispielsweise eines Audiosignals für die Ausgabe eines Schalls von einem Hörer (Lautsprecher) des Hörhilfegeräts und/oder eines Fehlersignals, sofern der Aktivierungsbefehl und oder die darauf folgende Sprachsequenz nicht oder nicht ausreichend zuverlässig von der Spracherkennung anhand des Peripheriegeräts erkannt wurde, an das Hörhilfegerät. Für die Spracherkennung des Aktivierungsbefehls und/oder der Sprachsequenz weist das Peripherie eine zweite Spracherkennungseinheit auf, welche mit dem digitalen Assistenten gekoppelt, insbesondere von diesem angesteuert und/oder genutzt wird.

Nachfolgend wird ein Ausführungsbeispiel der Erfindung anhand einer Zeichnung näher erläutert. Darin zeigen:
- Fig. 1: schematisch ein Hörgerätesystem mit einem Hörhilfegerät sowie mit einem Peripheriegerät, welches einen sprachgesteuerten digitalen Assistenten bereitstellt, und
- Fig. 2: einen Verfahrensablauf zum Betrieb des Hörgerätesystems, wobei derjenige Teil eines Mikrofonsignals vom Hörhilfegerät bearbeitet wird, welcher einen Aktivierungsbefehl des digitalen Assistenten sowie eine darauf folgende Sprachsequenz repräsentiert, und wobei dieser bearbeitete Teil an den digitalen Assistenten des Peripheriegeräts übertragen wird.

Einander entsprechende Teile und Größen sind in allen Figuren stets mit gleichen Bezugszeichen versehen.

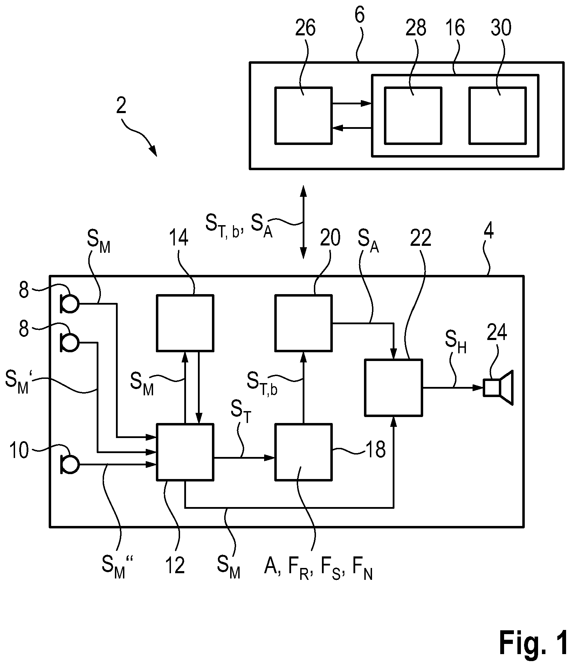

In der Fig. 1 ist ein Hörgerätesystem 2 dargestellt, welches ein Hörhilfegerät 4 sowie ein Peripheriegerät 6 aufweist. Das Hörhilfegerät umfasst zwei Umgebungsmikrofone 8 anhand denen Schall aus der Umgebung des Trägers des Hörhilfegeräts 4 erfasst werden kann. Zudem weist das Hörhilfegerät 2 ein Gehörgangmikrofon 10 auf, welches der Erfassung von Schall im Gehörgang des Trägers dient.

Die Umgebungsmikrofone 8 sowie das Gehörgangmikrofon 10 ist jeweils ein elektroakustischer Wandler. Diese wandeln den jeweils erfassten Schall in der Umgebung des Trägers, kurz auch als Umgebungsschall bezeichnet, bzw. den erfassten Schall im Gehörgang8, kurz auch als Gehörgangschall bezeichnet, in ein elektrisches Mikrofon-Signal S_{M}, S_{M}' bzw. S_{M}".

Die Mikrofonsignale S_{M}, S_{M}' bzw. S_{M}" sind an eine Eigenstimmerkennungseinheit 12 ausgegebbar. Hierzu sind die Mikrofone 8 und 10 signalübertragungstechnisch mit der Eigenstimmerkennungseinheit 12 verbunden.

Die Eigenstimmerkennungseinheit 12 ist dabei dazu eingerichtet, eine Eigenstimmerkennung durchzuführen. Mit anderen Worten werden anhand der Eigenstimmerkennungseinheit 12 zumindest eines der Mikrofonsignale S_{M}, S_{M}', S_{M}" oder ein aus diesen abgeleiteten Signal hinsichtlich des Vorhandenseins der eigenen Stimme des Trägers analysiert, beispielsweise anhand eines hierzu geeigneten Filters oder anhand eines Pegelvergleichs.

In Fig .1 sowie im Folgenden wird zum Zwecke einer besseren Verständlichkeit lediglich auf das Mikrofonsignal S_{M} Bezug genommen. Die folgenden Ausführungen gelten in analoger Weise auch für das Mikrofonsignal S_{M}' und S_{M}" oder für ein aus diesen abgeleitetes Signal.

Zudem umfasst das Hörhilfegerät 4 eine mit signalübertragungstechnisch mit der Eigenstimmerkennungseinheit 12 gekoppelte erste (Worterkennungseinheit) Spracherkennungseinheit 14 zur Untersuchung (Analyse) des Mikrofonsignals S_{M} auf einen vordefinierten Aktivierungsbefehl des sprachgesteuerten digitalen Assistenten 16 eines zugeordneten Peripheriegeräts 6. Der Aktivierungsbefehl ist dabei auf einem nicht weiter dargestellten Speicher des Hörhilfegeräts 4 hinterlegt.

Zur Bearbeitung des Mikrofonsignals S_{M} oder eines Teils S_{T} hiervon umfasst das Hörhilfegerät 4 eine mit der Spracherkennungseinheit 12 gekoppelte Signalbearbeitungseinheit 18. Diese stellt einen Algorithmus A zur Bearbeitung des Mikrofonsignals S_{M} oder des Teils S_{T} hiervon bereit. Die Signalbearbeitungseinheit 18 ist dabei derart eingerichtet, dass derjenige Teil S_{T} des Mikrofonsignals S_{M}, welcher den Aktivierungsbefehl sowie eine darauf folgende Sprachsequenz repräsentiert, bei Erkennen des vordefinierten Aktivierungsbefehls des digitalen Assistenten 16 anhand des Algorithmus A bearbeitet. Dieser Teil S_{T} des Mikrofonsignals wird im Folgenden auch als Sprachsignal S_{T} bezeichnet.

Das Hörhilfegerät weist erste Übertragungseinheit 20 zur kabellosen Übertragung des bearbeiteten Sprachsignals S_{T,b} an das Peripheriegerät 6 auf. Hierzu ist die erste Übertragungseinheit mit der Signalbearbeitungseinheit 18 gekoppelt.

Die erste Übertragungseinheit 20 sowie die Eigenstimmerkennungseinheit 12 ist zudem mit einer Verstärkungseinheit 22 signalübertragungstechnisch gekoppelt, welche ein von der ersten Übertragungseinheit 20 empfangenes Audiosignal oder das Mikrofonsignal S_{M} oder das von der Eigenstimmerkennungseinheit 12 zur Eigenstimmerkennung bearbeitete Mikrofonsignal S_{M} entsprechend eines Hördefizits des Trägers bearbeitet und verstärkt und ein entsprechendes Hörer-Signal S_{H} an einen Hörer 24, hier ein Mikrolautsprecher, welcher ebenfalls im Gehörgang des Trägers, eingebracht ist, ausgibt. Der Hörer 24 wandelt das Hörer-Signal in Schall und gibt diesen in den Gehörgang des Trägers aus. Die Verstärkungseinheit 22 ist gemäß einer nicht weiter dargestellten Alternative in die Signalbearbeitungseinheit 18 integriert.

Das in der Fig. 1 dargestellte Hörgerätesystem 2 weist weiterhin das Peripheriegerät 6 auf. Dieses umfasst eine zweite Übertragungseinheit 26 zum Empfang des vom Hörhilfegerät 4 übertragenen bearbeiteten Sprachsignals S_{T,b} und/oder zur Übertragung eines Antwortsignals S_{A}, beispielsweise das Audiosignal oder ein Fehlersignal, an das Hörhilfegerät 4.

Das Peripheriegerät stellt einen sprachgesteuerten digitalen Assistenten 16 bereit. Dieser steuert und/oder nutzt eine mit der zweiten Übertragungseinheit 26 signalübertragungstechnisch gekoppelte zweite Spracherkennungseinheit 28 des Peripheriegeräts 6 zur Spracherkennung am übertragenen bearbeiteten Sprachsignals S_{T,b} sowie eine mit der zweiten Spracherkennungseinheit 28 gekoppelten Analyseeinheit 30 zur Analyse der von der zweiten Spracherkennungseinheit 28 erkannten Worte bzw. der erkannten Wortsequenz.

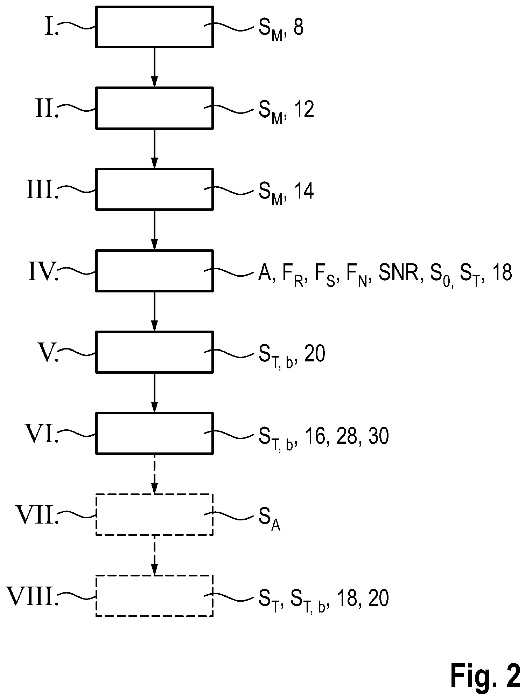

In der Fig. 2 ist ein Verfahren zum Betrieb des Hörgerätesystems 2 dargestellt. In einem ersten Schritt I. wird Schall vom Umgebungsmikrofon 8 erfasst und in ein diesen Schall repräsentierendes Mikrofonsignal S_{M} umgewandelt. Dieses wird an die Eigenstimmerkennungseinheit 12 ausgegeben. Diese führt in einem zweiten Schritt II. eine Eigenstimmerkennung ("own voice detection") an dem Mikrofonsignal S_{M} durch.

Sofern die eigene Stimme des Trägers des Hörhilfegeräts 4 in Schritt II. erkannt wurde, wird in einem dritten Schritt III. wird das Mikrofonsignal SM anhand der ersten Spracherkennungseinheit 14 des Hörhilfegeräts 4 hinsichtlich des Aktivierungsbefehls des digitalen Assistenten 16 analysiert, welcher im Speicher des Hörhilfegeräts hinterlegt ist. Hierbei wird ein Wort oder eine Wortsequenz, welches bzw. welche als Ergebnis dieser Analyse ermittelt wurde, mit dem Hinterlegten Aktivierungsbefehl verglichen.

Sofern der Aktivierungsbefehl erkannt wurde, also die ermittelten Worte bzw. die ermittelte Wortsequenz mit dem hinterlegen Aktivierungsbefehl übereinstimmt, wird in einem vierten Schritt IV. das Mikrofonsignal S_{M}, genauer derjenige Teil S_{T} des Mikrofonsignals S_{M}, welcher den Aktivierungsbefehl sowie eine unmittelbar darauf folgende Sprachsequenz (Wortsequenz) repräsentiert, anhand des Algorithmus A bearbeitet.

Der Algorithmus A umfasst dabei ein räumliches Filter F_{R}, welches als ein monaurales oder ein binaurales beamforming ausgestaltet ist, um die eigene Stimme des Trägers des Hörhilfegeräts 4 von anderen Geräusch- oder Sprachquellen zu trennen. Hierbei werden die anhand des Filters F_{R} erkannten Eigenstimmanteile des Sprachsignals S_{T} nicht geändert, und die anderen Anteile des Sprachsignals S_{T} auf null reduziert.

Zusätzlich oder alternativ umfasst der Algorithmus A ein Rauschfilter F_{N}, welches ein Rauschen des Sprachsignals S_{T} reduziert. Die Stärke der Reduzierung ist dabei von einem Signal-zu-Rausch-Verhältnisses SNR des Sprachsignals ST abhängig, wobei die Reduzierung umso größer ist, je kleiner das Signal-zu-Rausch-Verhältnis SNR ist.

Zusätzlich oder alternativ umfasst der Algorithmus ein spektrales Filter Fs, welches diejenigen Bestandteile des Sprachsignals S_{T}, welche Frequenzen kleiner als 5 kHz entsprechen, reduziert (dämpft).Zusätzlich werden diejenigen Bestandteile des Sprachsignals S_{T}, welche Frequenzen größer als 10 kHz entsprechen, anhand des spektralen Filters Fs verstärkt.

Zusammenfassend wird bei der Bearbeitung des Sprachsignals S_{T} das räumliche Filter F_{R}, das Rauschfilter F_{N}, und/oder das spektrale Filter Fs auf dieses T angewendet.

Zusätzlich oder alternativ zu den Filtern F_{R}, F_{N}, F_{S} wird bei der Bearbeitung des Sprachsignals S_{T} eine Spracherkennung am Sprachsignal S_{T} mittels der ersten Spracherkennungseinheit 14 durchgeführt. Nach jedem erkannten Wort des Aktivierungsbefehls und/oder der Sprachsequenz des Sprachsignals S_{T} wird an der entsprechenden Stelle des Sprachsignals S_{T} ein Trennsignal S₀ eingefügt. Dieses Trennsignal S₀ repräsentiert dabei beispielsweise Stille, also das Fehlen von Schall. Anhand dieses Trennsignal S0 sind somit die Wörter des Aktivierungsbefehls und/oder der Sprachsequenz somit voneinander separiert.

Der Algorithmus A, insbesondere dessen Filter F_{R}, F_{N}, F_{S} und/oder das Trennsignal S₀, beispielsweise dessen (Signal-)Länge, wurden anhand eines zeitlich zuvor erfolgten Trainings hinsichtlich einer möglichst hohen Erkennungsrate der Spracherkennung durch den digitalen Assistenten 16 eingestellt. Dies erfolgt beispielsweise im Zuge eines Fittings beim Hörgerätetraining oder in einem zum Training vorgesehen Trainings-Betriebsmodus. Zudem wird der Algorithmus A bei Betrieb, insbesondere auch im Normalbetrieb, des Hörgerätesystems 2 anhand eines Antwortsignals S_{A} (vgl. Fig. 2) trainiert, sofern die Spracherkennung und/oder die Analyse des bearbeiteten Sprachsignals S_{T,b} durch den digitalen Assistenten 16 nicht erfolgreich ist.

Zusammenfassend ist der Algorithmus adaptiv und ist und wird anhand eines Trainings an die Spracherkennung des digitalen Assistenten 16 angepasst.

Beispielsweise werden im Zuge des Trainings beim Rauschfilter F_{N} ein Betrag der Dämpfung des Rauschens angepasst Beim spektralen Filter Fs werden im Zuge des Trainings beispielsweise die Frequenzbereiche für eine Reduzierung der Bestandteile des Sprachsignals und/oder für die Verstärkung der Bestandteile des Sprachsignals und/oder ein Betrag für die Reduzierung oder für die Verstärkung angepasst. Weiterhin wird beim räumlichen Filter im Zuge des Trainings beispielsweise ein Betrag einer Reduzierung von Störgeräuschen angepasst, wobei unter Störgeräuschen Geräusche oder Sprache verstanden wird, welche nicht von einem als Bereich ausgeht, welcher dem Mund des Trägers zugeordnet ist. Alternativ oder zusätzlich kann der Bereich, welcher dem Mund zugeordnet wird, angepasst werden.

Anschließend wird in einem fünften Schritt V. das derart bearbeitete Sprachsignal S_{T,b}, also derjenige bearbeitete Teil S_{T,b} des Mikrofonsignals S_{M}, welcher den Aktivierungsbefehl sowie eine unmittelbar darauf folgende Sprachsequenz repräsentiert anhand der ersten Übertragungseinheit 20 und der zweiten Übertragungseinheit 26 vom Hörhilfegerät 4 an das Peripheriegerät 6 übertragen.

In Schritt VI. wird das bearbeitete und an das Peripheriegerät 6 übertragene Sprachsignal S_{T,b} anhand einer Spracherkennung des digitalen Assistenten 16 analysiert, wozu dieser die zweite Spracherkennungseinheit 28 verwendet. Zudem wird in Schritt VI. die derart erkannte Wortfolge, welche den Aktivierungsbefehl sowie die darauf folgende Sprachsequenz enthält, mittels durch den digitalen Assistenten 16 anhand der Analyseeinheit 30 hinsichtlich des Inhalts der Wortfolge analysiert und interpretiert. Wird nach dem Aktivierungsbefehl ein weiterer Befehl in der Sprachsequenz erkannt, wird dieser anhand des digitalen Assistenten 16 ausgeführt. In diesem Fall wird gegebenenfalls in Schritt VII. ein Audiosignal als Antwortsignal S_{A} an das Hörhilfegerät 4 übertragen, wobei es von der Verstärkereinheit 22 bearbeitet und mittels des Hörers als Schall ausgegeben wird.

Wird jedoch der Aktivierungsbefehls und/oder die darauf folgende Sprachsequenz nicht vom digitalen Assistenten durch die Spracherkennung erkannt oder ist kein weiterer Befehl durch die Interpretation durch die Analyseeinheit bestimmbar, so wird in Schritt VII. ein Fehlersignal als Antwortsignal S_{A} an das Hörhilfegerät 4 übertragen. In der Fig. 2 sind die Verfahrensschritte VII. und VIII. für diesen Fall strichliniert dargestellt. In diesem Fall wird das zuvor bearbeitete und an das Peripheriegerät übertragene Sprachsignal S_{T} automatisch in Schritt VIII. erneut bearbeitet, wobei der Algorithmus zur Bearbeitung geändert wurde. Der Algorithmus wurde dabei anhand eines Optimierungsverfahrens eingestellt und trainiert, wobei das Optimierungsverfahren dazu eingerichtet ist, die Erkennungsrate der Wortfolge des Sprachsignals S_{T} durch die Spracherkennung des digitalen Assistenten zu erhöhen. Das erneut bearbeitete Signal S_{T,b} wird zudem in Schritt VIII. erneut an das Peripheriegerät 6 zur Spracherkennung und zur Analyse durch den digitalen Assistenten 16 übertragen.

### Bezugszeichenliste

- 2: Hörgerätesystem
- 4: Hörhilfegerät
- 6: Peripheriegerät
- 8: (Umgebungs-)Mikrofon
- 10: (Gehörgangs-)Mikrofon
- 12: Eigenstimmerkennungseinheit
- 14: Spracherkennungseinheit des Hörhilfegeräts
- 16: digitaler Assistent
- 18: Signalbearbeitungseinheit des Hörhilfegeräts
- 20: Übertragungseinheit des Hörhilfegeräts
- 26: Übertragungseinheit des Peripheriegeräts
- 28: Spracherkennungseinheit des Peripheriegeräts
- 24: Hörer
- 22: Verstärkungseinheit
- 30: Analyseeinheit

- A: Algorithmus
- F_{N}: Rauschfilter
- F_{R}: räumlicher Filter
- F_{S}: spektraler Filter
- S_{A}: Antwortsignal
- S_{b}: bearbeiteter Teil des Mikrofonsignals
- S_{H}: Hörersignal
- S_{M}: Mikrofonsignal
- S_{T}: Teil des Mikrofonsignals
- S_{T,b}: bearbeiteter Teil des Mikrofonsignals
- S₀: Trennsignal
- SNR: Signal-zu-Rausch-Verhältnis

- I.: Erfassen von Schall und Erzeugung eines Mikrofonsignals
- II.: Eigenstimmerkennung am Mikrofonsignal
- III.: Spracherkennung
- IV.: Bearbeitung des Teils des Mikrofonsignals
- V.: Übertragen des bearbeiteten Teils des Mikrofonsignals
- VI.: Spracherkennung und Analyse durch den digitalen Assistenten
- VII.: Übertragung eines Antwortsignals an das Hörhilfegerät
- VIII.: erneutes Bearbeiten und Übertragen des Mikrofonsignals

## Patentansprüche

1. Verfahren zum Betrieb eines Hörgerätesystems (2), welches ein Hörhilfegerät (4) und ein Peripheriegerät (6) aufweist, welches einen sprachgesteuerten digitalen Assistenten (16) bereitstellt,
- wobei ein Mikrofonsignal (S_{M}) vom Hörhilfegerät (4) auf das Vorhandensein der eigenen Stimme des Trägers hin Eigenstimmanteile des Trägers des Hörhilfegerät (4) untersucht wird,
- wobei das Mikrofonsignal (S_{M}) bei Erkennen von Eigenstimmanteilen vom Hörhilfegerät (4) auf einen vordefinierten Aktivierungsbefehl des digitalen Assistenten (16) untersucht wird,
- wobei bei Erkennen des Aktivierungsbefehls ein Teil (S_{T}) des Mikrofonsignals (S_{M}), welcher den Aktivierungsbefehl sowie eine darauf folgende Sprachsequenz repräsentiert, für eine Spracherkennung des digitalen Assistenten (16) vom Hörhilfegerät (4) anhand eines Algorithmus (A) bearbeitet wird, und
- wobei der bearbeitete Teil (S_{T},_{b}) des Mikrofonsignals (S_{M}) an das Peripheriegerät (6) übertragen wird,
**dadurch gekennzeichnet,**
- **dass** vom Peripheriegerät (6) ein als Fehler-Signal ausgebildetes Antwortsignal (S_{A}) an das Hörhilfegerät übertragen wird, wenn die Spracherkennung des Peripheriegeräts (6) den Aktivierungsbefehl und/oder die Sprachsequenz nicht erkennt,
- **dass** der Teil (S_{T}) des Mikrofonsignals (S_{M}) erneut mit geändertem Algorithmus (A) bearbeitet wird, und
- **dass** der erneut bearbeitete Teil (S_{T}) des Mikrofonsignals (S_{M}) an das Peripheriegerät (6) übertragen wird.

2. Verfahren nach Anspruch1,
**dadurch gekennzeichnet,**
**dass** der Algorithmus (A) adaptiv ist.

3. Verfahren nach Anspruch 1 oder 2,
**dadurch gekennzeichnet,**
**dass** der Algorithmus (A) anhand eines Trainings eingestellt wird und/oder wurde.

4. Verfahren nach einem der Ansprüche 1 bis 3,
**dadurch gekennzeichnet,**
**dass** der Algorithmus (A) ein räumliches Filter (F_{R}) umfasst.

5. Verfahren nach einem der Ansprüche 1 bis 4,
**dadurch gekennzeichnet,**
**dass** der Algorithmus (A) ein Rauschfilter (F_{N}) umfasst, welches ein Rauschen des Teils (S_{T}) des Mikrofonsignals (S_{M}) in Abhängigkeit eines Signal-zu-Rausch-Verhältnisses (SNR) dieses Teils (S_{T}) reduziert.

6. Verfahren nach einem der Ansprüche 1 bis 5,
**dadurch gekennzeichnet,**
**dass** der Algorithmus (A) ein spektrales Filter (Fs) umfasst, welches die spektralen Bestandteile des Teils (S_{T}) des Mikrofonsignals (S_{M}) modifiziert, wobei insbesondere der Teil (S_{T}) des Mikrofonsignals (S_{M}) in einem Frequenzbereich für kleine Frequenzen gedämpft, und/oder den Teil (S_{T}) des Mikrofonsignals (S_{M}) in einem Frequenzbereich für hohe Frequenzen verstärkt wird.

7. Verfahren nach einem der Ansprüche 1 bis 6
**dadurch gekennzeichnet,**
**dass** bei der Bearbeitung des den Aktivierungsbefehl sowie die darauf folgende Sprachsequenz repräsentierenden Teils (S_{T}) des Mikrofonsignals (S_{M}) eine Spracherkennung mittels des Hörhilfegeräts (4) durchgeführt wird, wobei nach einem erkannten Wort des Aktivierungsbefehls und/oder der Sprachsequenz an der entsprechenden Stelle des Teils (S_{T}) des Mikrofonsignals (S_{M}) ein Trennsignal (S₀) eingefügt wird.

8. Hörhilfegerät (4) für ein Hörgerätesystem (2), aufweisend
- zumindest ein Mikrofon (8) zur Erzeugung eines Mikrofonsignals (S_{M}),
- eine Eigenstimmerkennungseinheit (12) zur Untersuchung des Mikrofonsignals (S_{M}) auf Eigenstimmanteile des Trägers des Hörhilfegeräts (4),
- eine erste Spracherkennungseinheit (14) zur Untersuchung des Mikrofonsignals (S_{M}) auf einen vordefinierten Aktivierungsbefehl eines sprachgesteuerten digitalen Assistenten (16) eines Peripheriegeräts (6),
- eine Signalbearbeitungseinheit (18), die einen Algorithmus (A) bereitstellt, und welche derart eingerichtet ist, dass bei Erkennen des vordefinierten Aktivierungsbefehls derjenige Teil (S_{T}) des Mikrofonsignals (S_{M}), welcher den Aktivierungsbefehl sowie eine darauf folgende Sprachsequenz repräsentiert, anhand des Algorithmus (A) für eine Spracherkennung des digitalen Assistenten (16) bearbeitet wird, sowie
- eine erste Übertragungseinheit (20) zur Übertragung des bearbeiteten Teils des Mikrofonsignals (S_{M}) an das Peripheriegerät (6),
**dadurch gekennzeichnet,**
**dass** die Signalbearbeitungseinheit (18) derart eingerichtet ist, dass der Teil (S_{T}) des Mikrofonsignals (S_{M}) erneut mit geändertem Algorithmus bearbeitet wird, wenn vom Peripheriegerät (6) ein als Fehler-Signal ausgebildetes Antwortsignal (S_{A}) an das Hörhilfegerät übertragen wurde.

9. Hörgerätesystem (2), betrieben gemäß dem Verfahren nach einem der Ansprüche 1 bis 7, aufweisend ein Hörhilfegerät (4) nach Anspruch 8 sowie ein Peripheriegerät (6) mit einem sprachgesteuerten digitalen Assistenten (16), wobei das Peripheriegerät (6) eine zweite Übertragungseinheit (26) zum Empfang des vom Hörhilfegerät (4) übertragenen und bearbeiteten Teils (S_{T},_{b}) des Mikrofonsignals (S_{M}) und zum Übertragen eines Antwortsignals (S_{A}) an das Hörhilfegerät (4) sowie eine zweite Spracherkennungseinheit (28) für eine Spracherkennung eines Aktivierungsbefehls und/oder einer Sprachsequenz aufweist.

## Claims

1. Method for operating a hearing device system (2) comprising a hearing aid (4) and a peripheral device (6) that provides a voice-controlled digital assistant (16),
- wherein a microphone signal (S_{M}) is examined by the hearing aid (4) for the presence of the wearer's own voice own voice components from the wearer of the hearing aid (4),
- wherein the microphone signal (S_{M}) is examined by the hearing aid (4) for a predefined activation command for the digital assistant (16) if own voice components are recognized,
- wherein recognition of the activation command results in a portion (S_{T}) of the microphone signal (S_{M}) that represents the activation command and also a subsequent voice sequence being processed for a voice recognition of the digital assistant (16) by the hearing aid (4) on the basis of an algorithm (A), and
- wherein the processed portion (S_{T},_{b}) of the microphone signal (S_{M}) is transmitted to the peripheral device (6),
**characterized**
- **in that** the peripheral device (6) transmits a response signal (S_{A}) in the form of an error signal to the hearing aid if the voice recognition of the peripheral device (6) does not recognize the activation command and/or the voice sequence,
- **in that** the portion (S_{T}) of the microphone signal (S_{M}) is reprocessed using an amended algorithm (A),
and
- **in that** the reprocessed portion (S_{T}) of the microphone signal (S_{M}) is transmitted to the peripheral device (6).

2. Method according to Claim 1,
**characterized**
**in that** the algorithm (A) is adaptive.

3. Method according to Claim 1 or 2,
**characterized**
**in that** the algorithm (A) is and/or has been adjusted on the basis of a training.

4. Method according to one of Claims 1 to 3, **characterized**
**in that** the algorithm (A) comprises a spatial filter (F_{R}).

5. Method according to one of Claims 1 to 4, **characterized**
**in that** the algorithm (A) comprises a noise filter (F_{N}) that reduces noise in the portion (S_{T}) of the microphone signal (S_{M}) on the basis of a signal-to-noise ratio (SNR) of this portion (S_{T}) .

6. Method according to one of Claims 1 to 5, **characterized**
**in that** the algorithm (A) comprises a spectral filter (F_{S}) that modifies the spectral components of the portion (S_{T}) of the microphone signal (S_{M}), with in particular the portion (S_{T}) of the microphone signal (S_{M}) being attenuated in a frequency range for low frequencies and/or the portion (S_{T}) of the microphone signal (S_{M}) being amplified in a frequency range for high frequencies.

7. Method according to one of Claims 1 to 6, **characterized**
**in that** when processing the portion (S_{T}) of the microphone signal (S_{M}) that represents the activation command and the subsequent voice sequence voice recognition is carried out by means of the hearing aid (4), wherein after a recognized word of the activation command and/or the voice sequence a separating signal (S₀) is inserted at the corresponding point in the portion (S_{T}) of the microphone signal (S_{M}).

8. Hearing aid (4) for a hearing device system (2), comprising
- at least one microphone (8) for generating a microphone signal (S_{M}),
- an own voice detection unit (12) for examining the microphone signal (S_{M}) for own voice components from the wearer of the hearing aid (4),
- a first voice recognition unit (14) for examining the microphone signal (S_{M}) for a predefined activation command for a voice-controlled digital assistant (16) of a peripheral device (6),
- a signal processing unit (18) that provides an algorithm (A) and that is configured such that recognition of the predefined activation command results in that portion (S_{T}) of the microphone signal (S_{M}) that represents the activation command and also a subsequent voice sequence being processed on the basis of the algorithm (A) for a voice recognition of the digital assistant (16), and
- a first transmission unit (20) for transmitting the processed portion of the microphone signal (S_{M}) to the peripheral device (6),
**characterized**
**in that** the signal processing unit (18) is configured such that the portion (S_{T}) of the microphone signal (S_{M}) is reprocessed using an amended algorithm if the peripheral device (6) has transmitted a response signal (S_{A}) in the form of an error signal to the hearing aid.

9. Hearing device system (2), operated using the method according to one of Claims 1 to 7, comprising a hearing aid (4) according to Claim 8 and a peripheral device (6) having a voice-controlled digital assistant (16), the peripheral device (6) having a second transmission unit (26) for receiving the processed portion (S_{T},_{b}) of the microphone signal (S_{M}) that has been transmitted by the hearing aid (4) and for transmitting a response signal (S_{A}) to the hearing aid (4) and also a second voice recognition unit (28) for voice recognition of an activation command and/or a voice sequence.

## Revendications

1. Procédé de fonctionnement d'un système de prothèse auditive (2) qui comprend une prothèse auditive (4) et un dispositif périphérique (6) qui fournit un assistant numérique à commande vocale (16),
- un signal microphonique (S_{M}) étant analysé par la prothèse auditive (4) pour déterminer la présence de la propre voix du porteur des composantes de la propre voix du porteur de la prothèse auditive (4),
- le signal microphonique (S_{M}) étant analysé par la prothèse auditive (4) pour déterminer une instruction d'activation prédéfinie de l'assistant numérique (16) lorsque des composantes de la propre voix sont reconnues,
- lorsque l'instruction d'activation est reconnue, une partie (S_{T}) du signal microphonique (S_{M}), qui représente l'instruction d'activation et une séquence vocale qui la suit, étant traitée par la prothèse auditive (4) à l'aide d'un algorithme (A) pour une reconnaissance vocale de l'assistant numérique (16), et
- la partie traitée (S_{T},_{b}) du signal microphonique (S_{M}) étant transmise au dispositif périphérique (6), **caractérisé en ce que**
- le dispositif périphérique (6) transmet un signal de réponse (S_{A}), conçu comme un signal d'erreur, à la prothèse auditive si la reconnaissance vocale du dispositif périphérique (6) ne reconnaît pas l'instruction d'activation et/ou la séquence vocale,
- la partie (S_{T}) du signal microphonique (S_{M}) est à nouveau traitée avec un algorithme (A) modifié, et
- la partie (S_{T}), traitée à nouveau, du signal microphonique (S_{M}) est transmise au dispositif périphérique (6).

2. Procédé selon la revendication 1,
**caractérisé en ce que**
l'algorithme (A) est adaptatif.

3. Procédé selon la revendication 1 ou 2,
**caractérisé en ce que**
l'algorithme (A) est et/ou a été réglé sur la base d'un apprentissage.

4. Procédé selon l'une des revendications 1 à 3, **caractérisé en ce que**
l'algorithme (A) comprend un filtre spatial (F_{R}).

5. Procédé selon l'une des revendications 1 à 4, **caractérisé en ce que**
l'algorithme (A) comprend un filtre de bruit (F_{N}) qui réduit le bruit dans la partie (S_{T}) du signal microphonique (S_{M}) en fonction d'un rapport signal sur bruit (SNR) de cette partie (S_{T}).

6. Procédé selon l'une des revendications 1 à 5, **caractérisé en ce que**
l'algorithme (A) comprend un filtre spectral (Fs) qui modifie les composantes spectrales de la partie (S_{T}) du signal microphonique (S_{M}), en particulier la partie (S_{T}) du signal microphonique (S_{M}) étant atténuée dans une gamme de fréquences basses, et/ou la partie (S_{T}) du signal microphonique (S_{M}) étant amplifiée dans une gamme de fréquences élevées.

7. Procédé selon l'une des revendications 1 à 6 **caractérisé en ce que**
lorsque la partie (S_{T}) du signal microphonique (S_{M}) qui représente l'instruction d'activation et la séquence vocale qui la suit est traitée, une reconnaissance vocale est effectuée à l'aide de la prothèse auditive (4),
après un mot reconnu de l'instruction d'activation et/ou de la séquence vocale, un signal de séparation (S₀) étant inséré à la position correspondante de la partie (S_{T}) du signal microphonique (S_{M}) .

8. Prothèse auditive (4) destiné à un système de prothèse auditive (2), ladite prothèse auditive comprenant
- au moins un microphone (8) destiné à générer un signal microphonique (S_{M}),
- une unité de reconnaissance vocale (12) destinée à analyser le signal microphonique (S_{M}) pour déterminer les composantes de la propre vois du porteur de la prothèse auditive (4),
- une première unité de reconnaissance vocale (14) destinée à analyser le signal microphonique (S_{M}) pour déterminer une instruction d'activation prédéfinie d'un assistant numérique à commande vocale (16) d'un dispositif périphérique (6),
- une unité de traitement de signal (18), qui fournit un algorithme (A) et qui est conçue de manière à ce que, lorsque l'instruction d'activation prédéfinie est reconnue, la partie (S_{T}) du signal microphonique (S_{M}), qui représente l'instruction d'activation et une séquence vocale qui la suit, soit traitée sur la base de l'algorithme (A) pour la reconnaissance vocale de l'assistant numérique (16), ainsi que
- une première unité de transmission (20) destinée à transmettre la partie traitée du signal microphonique (S_{M}) au dispositif périphérique (6),
**caractérisé en ce que**
l'unité de traitement de signal (18) est conçue de manière à ce que la partie (S_{T}) du signal microphonique (S_{M}) soit à nouveau traitée avec un algorithme modifié lorsque le dispositif périphérique (6) a transis un signal de réponse (S_{A}), conçu comme un signal d'erreur, à la prothèse auditive.

9. Système de prothèse auditive (2), fonctionnant conformément au procédé selon l'une des revendications 1 à 7, ledit système comprenant un dispositif de prothèse auditive (4) selon la revendication 8 et un dispositif périphérique (6) pourvu d'un assistant numérique à commande vocale (16), le dispositif périphérique (6) comportant une deuxième unité de transmission (26) destinée à recevoir la partie (S_{T},_{b}) du signal microphonique (S_{M}), transmise et traité par la prothèse auditive (4), et à transmettre un signal de réponse (S_{A}) à la prothèse auditive (4), ainsi qu'une deuxième unité de reconnaissance vocale (28) destinée à la reconnaissance vocale d'une instruction d'activation et/ou d'une séquence vocale.
